# EUROPEAN PATENT APPLICATION

(11) **EP 3 985 584 A1**
(43) Date of publication of application: **20.04.2022**
(21) Application number: 20846813.2
(22) Date of filing: 22.06.2020
(51) Int. Cl.: G06Q 10/06, G06Q 50/08

(54) **DATA PROCESSING SYSTEM FOR CONSTRUCTION MACHINE**

(30) Priority: 29.07.2019 JP 2019138434
(71) Applicant: KOBELCO CONSTRUCTION MACHINERY CO., LTD., Hiroshima-shi Hiroshima 731-5161 (JP)
(72) Inventor: KYU, Shingun, Hiroshima-shi, Hiroshima 731-5161 (JP); FUJIWARA, Sho, Hiroshima-shi, Hiroshima 731-5161 (JP); HOSO, Yukihiro, Hiroshima-shi, Hiroshima 731-5161 (JP); YAMAZAKI, Yoichiro, Hiroshima-shi, Hiroshima 731-5161 (JP)
(74) Representative: TBK
(86) International application number: PCT/JP2020/024283
(87) International publication number: WO 2021/019950

(57) **Abstract**

A data amount reduction unit (66) of a data processing system (10) of a construction machine is configured to reduce, based on a preset first reduction rule, a data amount of first image data that is a portion corresponding to a preset first specification work among time-series image data stored in a data storage unit (62), and reduce, based on a preset second reduction rule, a data amount of second image data that is a portion corresponding to a preset second specification work among the time-series image data stored in the data storage unit (62).

## Description

### Technical Field

The present invention relates to a data processing system for a construction machine for reducing a data amount of work data regarding work of the construction machine at a work site.

### Background Art

Conventionally, work data regarding work of a construction machine performed at a work site is stored in a storage unit (storage device), and is used as data for managing work of the construction machine, for example. Since the storage capacity of the storage unit is finite, a technique for reducing the data amount of the work data to be stored has been proposed.

Patent Literature 1 discloses an operation data collection device that receives the measurement data of a plurality of sensors mounted on a work machine as operation data, and records the operation data in an operation data storage unit. This operation data collection device adjusts the recording range and the recording interval of the operation data to be collected according to the download situation, the free space of the operation data storage unit, and the information freshness of the operation data. Specifically, regarding a record that has not yet been downloaded among records recorded in an operation data recording unit, this operation data collection device changes the record level according to the number of elapsed days from the data recording date, and changes the record level according to the ratio of the free space to the total capacity of the operation data recording unit. The recording level is a recording condition, where a higher numerical value indicates a larger amount of recorded information (paragraphs 0050 and 0051 of Patent Literature 1).

In an actual work site, a plurality of works having different work contents are usually performed by a construction machine.

However, the device of Patent Literature 1 uniformly changes, regardless of the work content, the record level of the operation data based on the download situation, the free space of the operation data storage unit, and the information freshness of the operation data. Therefore, the device of Patent Literature 1 cannot sometimes appropriately store the data of the work content that should be originally stored.

It is conceivable not only to store measurement data of the sensor in the storage unit as in the device of Patent Literature 1 but also to store image data of a construction machine in time series in the storage unit at a work site. This allows work-related persons such as a manager who manages work at the work site and an operator who performs work at the work site to use the image data stored in the storage unit for managing work of the construction machine. However, the time-series image data requires a larger capacity in the storage unit than the sensor measurement data does. Therefore, in order to store the time-series image data and use the image data for management of work of the construction machine, it is particularly important to reduce the data amount of the image data.

### Citation List

### Patent Literature

Patent Literature 1: JP 2015-095069 A

### Summary of Invention

The present invention has been made to solve the above problems, and an object thereof is to provide a data processing system for a construction machine that is possible to appropriately reduce a data amount of work data including time-series data of an image of the construction machine at a work site according to a work content of the construction machine.

A data processing system for a construction machine according to one aspect of the present invention is a data processing system for a construction machine for reducing a data amount of work data regarding work of a construction machine, the data processing system including: an image-capturing device that acquires time-series image data that is time-series data of an image including the construction machine at a work site; a data storage unit that stores the time-series image data; a work content determination unit that determines at least one work content of the construction machine based on the time-series image data; and a data amount reduction unit, in which the data amount reduction unit is configured to, when the at least one work content determined by the work content determination unit includes a preset first specification work, reduce, based on a preset first reduction rule, a data amount of first image data that is a portion corresponding to the first specification work among the time-series image data stored in the data storage unit, and, when the at least one work content determined by the work content determination unit includes a second specification work, which is a preset specification work and different from the first specification work, reduce, based on a second reduction rule, which is a preset reduction rule and different from the first reduction rule, a data amount of second image data that is a portion corresponding to the second specification work among the time-series image data stored in the data storage unit.

### Brief Description of Drawings

FIG. 1 is a schematic view illustrating a configuration of a data processing system according to an embodiment.
FIG. 2 is a block diagram illustrating a configuration of a data processing system according to an embodiment.
FIG. 3 is a side view illustrating an example of a construction machine.
FIG. 4 is a perspective view illustrating an example of a plurality of feature points of the construction machine.
FIG. 5 is a view for explaining processing of estimating a posture of the construction machine in the data processing system.
FIG. 6 is a view illustrating time-series posture data of the construction machine in the data processing system.
FIG. 7 is a view for explaining processing of determining a work content from the time-series posture data of the construction machine in the data processing system.
FIG. 8 is a view illustrating an example of a time-series change in a work content by a construction machine determined by a work content determination unit of the data processing system.
FIG. 9 is a view illustrating an example of a reduction rule set for each work site in the data processing system.
FIG. 10 is a view illustrating another example of a time-series change in a work content by a construction machine determined by the work content determination unit of the data processing system.
FIG. 11 is a view illustrating a screen of a display device that is an example of an HMI in the data processing system.
FIG. 12 is a view illustrating a screen of a display device that is an example of an HMI in the data processing system.
FIG. 13 is a view illustrating a screen of a display device that is an example of an HMI in the data processing system.
FIG. 14 is a view illustrating an example of a daily work report generated based on information acquired in the data processing system.
FIG. 15 is a flowchart presenting calculation processing of the data processing system.

### Description of Embodiments

An embodiment of the present invention will be described below with reference to the accompanying drawings. Note that the following embodiment is merely an example embodying the present invention and does not limit the technical scope of the present invention.

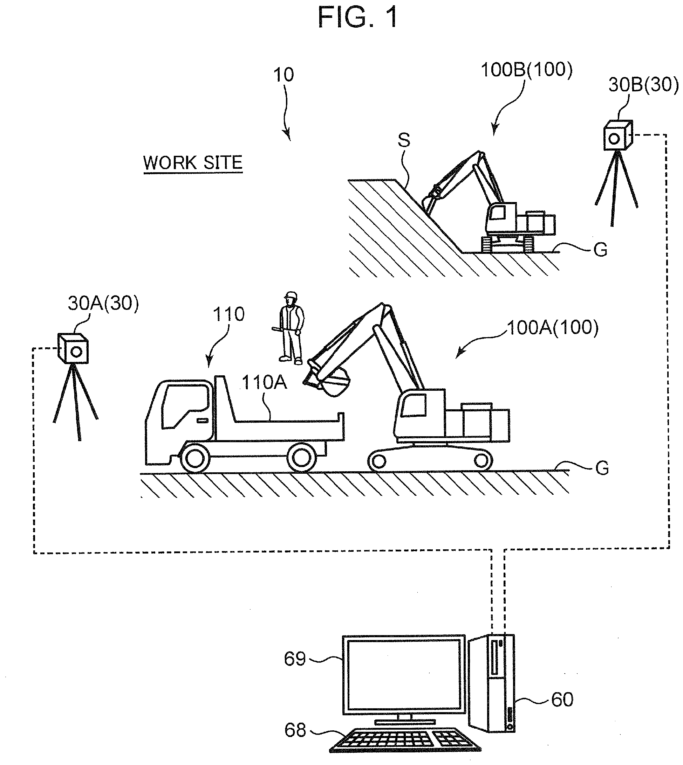

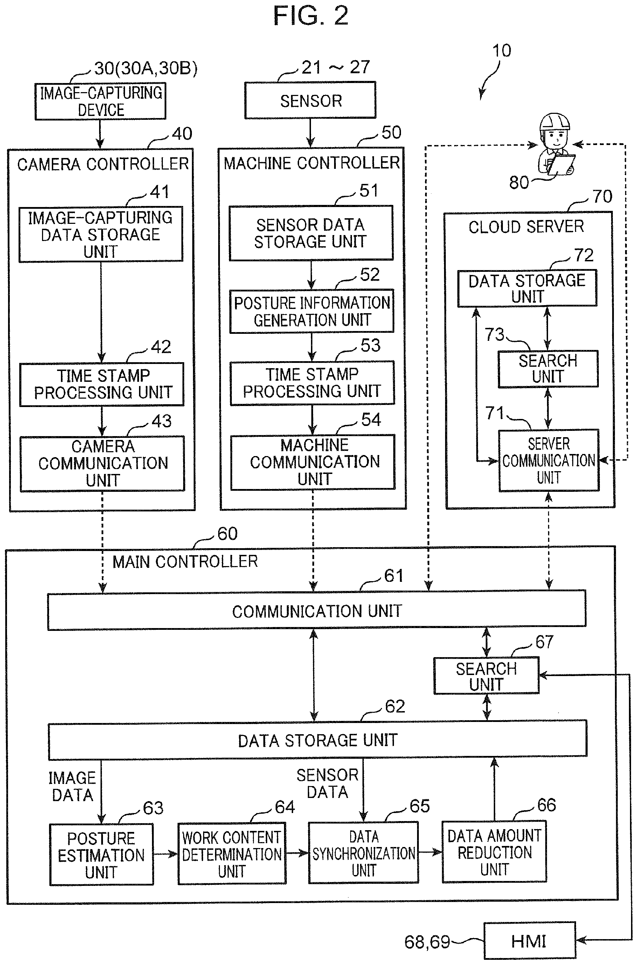

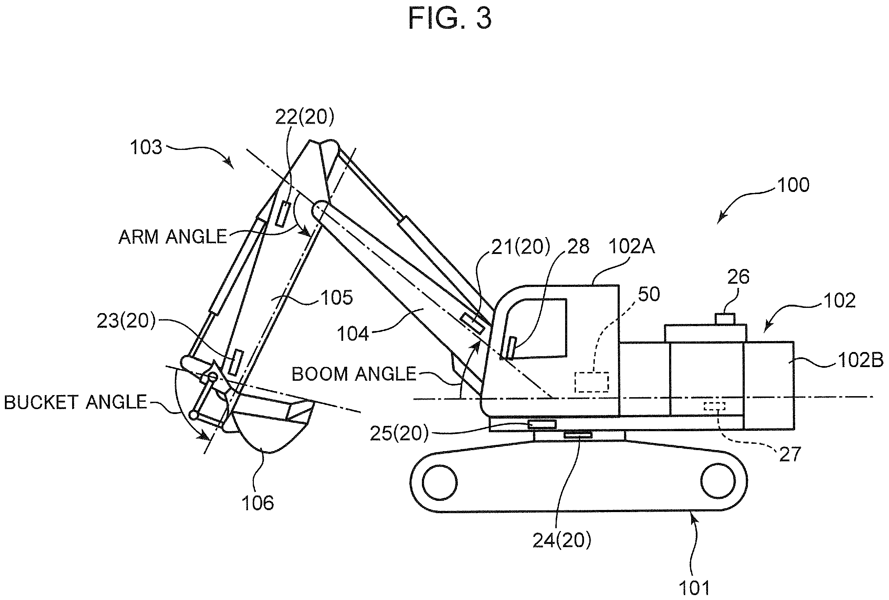

FIG. 1 is a schematic view illustrating the configuration of a data processing system 10 according to an embodiment. FIG. 2 is a block diagram illustrating the configuration of the data processing system 10. FIG. 3 is a side view illustrating an example of a construction machine 100. The data processing system 10 according to the present embodiment is a system for reducing a data amount of work data regarding work of the construction machine 100 at a work site.

The specific example illustrated in FIG. 1 illustrates a case where a plurality of construction machines 100 perform work at the work site. As illustrated in FIG. 1, the plurality of construction machines 100 include a first construction machine 100A and a second construction machine 100B. Each of the plurality of construction machines 100 includes a hydraulic excavator. Since these hydraulic excavators have a similar basic configuration, one construction machine 100 of the plurality of construction machines 100 will be described below, and description of the other construction machines 100 will be omitted.

The construction machine 100 includes a crawler type lower travelling body 101, an upper slewing body 102 mounted on the lower travelling body 101 so as to be slewable about a slewing center axis perpendicular to a travelling surface thereof, and an attachment 103 mounted on the upper slewing body 102 in a hoisting manner.

The upper slewing body 102 includes a cab 102A constituting a front portion (main body front portion) of the upper slewing body 102, and a counterweight 102B constituting a rear portion (main body rear portion) of the upper slewing body 102. The attachment 103 includes a boom 104 supported by the upper slewing body 102 in a hoisting manner, an arm 105 rotatably coupled to a tip end of the boom 104, and a bucket 106 (tip end attachment) rotatably coupled to a tip end of the arm 105.

The construction machine 100 includes a boom cylinder 107 that operates to cause the boom 104 to perform a hoisting operation with respect to the upper slewing body 102, an arm cylinder 108 that operates to cause the arm 105 to perform a rotating operation with respect to the boom 104, and a tip end attachment cylinder 109 that operates to cause the tip end attachment 106 to perform a rotating operation with respect to the arm 105.

As illustrated in FIGS. 1 and 2, the data processing system 10 includes a plurality of sensors, a machine controller 50, an image-capturing device 30, a camera controller 40, a main controller 60, and a cloud server 70. The machine controller 50, the camera controller 40, the main controller 60, and the cloud server 70 each includes, for example, a computer including a processor such as a CPU and a memory.

The plurality of sensors and the machine controller 50 are provided in the construction machine 100. The plurality of sensors acquire time-series operation data, which is time-series data of an operation parameter that changes corresponding to an operation of the construction machine 100. The operation parameter acquired by the plurality of sensors is input to the machine controller 50.

As illustrated in FIG. 3, the plurality of sensors include a boom angle sensor 21, an arm angle sensor 22, a bucket angle sensor 23, a slewing angle sensor 24, a vehicle body inclination angle sensor 25, a positioning sensor 26, and a rotation speed sensor 27. Accordingly, the operation parameter includes a detection value detected by each of these sensors 21 to 27. A specific explanation is as follows.

The boom angle sensor 21 is a sensor that detects a parameter for specifying a boom angle, which is an angle of the boom 104 with respect to the upper slewing body 102. The boom angle is, for example, an angle formed by a plane orthogonal to a slewing center of the upper slewing body 102 and a straight line extending along a longitudinal direction of the boom 104. The straight line extending along the longitudinal direction of the boom 104 is, for example, a straight line connecting a rotation center (center of a coupling pin) of a coupling portion between the upper slewing body 102 and a base end portion of the boom 104 and a rotation center (center of a coupling pin) of a coupling portion between the tip end portion of the boom 104 and the base end portion of the arm 105.

The arm angle sensor 22 is a sensor that detects a parameter for specifying an arm angle, which is an angle of the arm 105 with respect to the boom 104. The arm angle is, for example, an angle formed by the straight line extending along the longitudinal direction of the boom 104 and a straight line extending along the longitudinal direction of the arm 105. The straight line extending along the longitudinal direction of the arm 105 is, for example, a straight line connecting a rotation center (center of a coupling pin) of the coupling portion between the tip end portion of the boom 104 and the base end portion of the arm 105 and a rotation center (center of a coupling pin) of a coupling portion between the tip end portion of the arm 105 and the base end portion of the bucket 106.

The bucket angle sensor 23 is a sensor that detects a parameter for specifying a bucket angle, which is an angle of the bucket 106 with respect to the arm 105. The bucket angle is, for example, an angle formed by the straight line extending along the longitudinal direction of the arm 105 and a preset straight line defining the direction of the bucket 106. The straight line that defines the direction of the bucket 106 is, for example, a straight line connecting a rotation center (center of a coupling pin) of the coupling portion between the tip end portion of the arm 105 and the base end portion of the bucket and a tip end portion of the bucket (e.g., a toe portion of the bucket).

The boom angle sensor 21, the arm angle sensor 22, and the bucket angle sensor 23 may include, for example, an inclination angle sensor (e.g., acceleration sensor) that detects an inclination angle of the boom 104, an inclination angle of the arm 105, and an inclination angle of the bucket 106, respectively. The boom angle sensor 21, the arm angle sensor 22, and the bucket angle sensor 23 may include, for example, a rotation angle sensor that detects a rotation angle of a coupling portion (coupling pin) between the upper slewing body 102 and the base end portion of the boom 104, a rotation angle of the coupling portion (coupling pin) between the tip end portion of the boom 104 and the base end portion of the arm 105, and a rotation angle of the coupling portion (coupling pin) between the tip end portion of the arm 105 and the base end portion of the bucket, respectively. The boom angle sensor 21, the arm angle sensor 22, and the bucket angle sensor 23 may include, for example, a stroke sensor that detects a stroke amount of the boom cylinder 107, a stroke amount of the arm cylinder 108, and a stroke amount of the bucket cylinder 109, respectively.

The slewing angle sensor 24 is a sensor that detects a parameter for specifying a slewing angle, which is an angle of the upper slewing body 102 with respect to the lower travelling body 101. The slewing angle is defined with reference to, for example, a position (phase) where an advancing direction of the lower travelling body 101 coincides with a front of the upper slewing body 102 (direction in which the attachment 103 extends). Examples of the slewing angle sensor 24 include a gyro sensor and a rotary encoder.

The vehicle body inclination angle sensor 25 is a sensor that detects a parameter for specifying a vehicle body inclination angle, which is an angle of the lower travelling body 101 or the upper slewing body 102 with respect to a horizontal plane. Examples of the vehicle body inclination angle sensor 25 include a two-axis inclination sensor (acceleration sensor) that can acquire an inclination angle about an X axis of the lower travelling body 101 or the upper slewing body 102 and an inclination angle about a Y axis of the lower travelling body 101 or the upper slewing body 102. The X axis and the Y axis are horizontal axes orthogonal to each other.

Each of the boom angle sensor 21, the arm angle sensor 22, the bucket angle sensor 23, the slewing angle sensor 24, and the vehicle body inclination angle sensor 25 periodically detects a corresponding parameter at predetermined time intervals, and a detected detection result (detection signal) is sequentially input to the machine controller 50. The detection timing of the angle sensor 21 to 25 is preferably synchronized.

The positioning sensor 26 includes, for example, a global positioning system (GPS) sensor that can receive data regarding the GPS and a global navigation satellite system (GNSS) sensor that can receive data regarding the GNSS, and receives positioning data (GPS data, GNSS data, and the like) of the satellite positioning system. The positioning sensor 26 is attached to the construction machine 100, for example.

The rotation speed sensor 27 is provided in an engine not illustrated that is a drive source for a hydraulic pump in a hydraulic circuit of the construction machine 100, and detects the rotation speed of the engine.

The machine controller 50 includes a sensor data storage unit 51, a posture information generation unit 52, a time stamp processing unit 53, and a machine communication unit 54.

The sensor data storage unit 51 stores the operation parameter input from the plurality of sensors 21 to 27.

The posture information generation unit 52 generates posture information regarding the posture of the construction machine 100 based on the operation parameter stored in the sensor data storage unit 51. Specifically, the posture information generation unit 52 calculates the boom angle, the arm angle, the bucket angle, the slewing angle, and the vehicle body inclination angle based on the parameter input from the boom angle sensor 21, the arm angle sensor 22, the bucket angle sensor 23, the slewing angle sensor 24, and the vehicle body inclination angle sensor 25, respectively.

The time stamp processing unit 53 gives time information to the time-series operation data acquired by the plurality of sensors 21 to 27. A specific explanation is as follows.

The time stamp processing unit 53 stores, in association with the boom angle (posture information) having been calculated, the time when the detection result by the boom angle sensor 21 is input to the machine controller 50 or the time when the boom angle is calculated by the posture information generation unit 52, for example. Similarly, the time stamp processing unit 53 stores, in association with a calculated angle (posture information), time when the detection result by each of the arm angle sensor 22, the bucket angle sensor 23, the slewing angle sensor 24, and the vehicle body inclination angle sensor 25 is input to the machine controller 50 or the time when each of the arm angle, the bucket angle, the slewing angle, and the vehicle body inclination angle is calculated by the posture information generation unit 52.

The time stamp processing unit 53 stores time at which a detection result by the positioning sensor 26 is input to the machine controller 50 in association with the detection result. The time stamp processing unit 53 stores time at which a detection result by the rotation speed sensor 27 is input to the machine controller 50 in association with the detection result.

The machine communication unit 54 is configured to transmit and receive data to and from the main controller 60 (specifically, a communication unit 61 described later) via a network. The machine communication unit 54 transmits the time-series operation data to which the time information is given, the posture information to which the time information is given, and the like. The transmitted information such as the time-series operation data and the posture information is input to the main controller 60.

The network may include, for example, a long distance information communication network such as the Internet and a mobile phone communication network. The network may include, for example, a communication network that enables the machine communication unit 54 and the communication unit 61 to wirelessly communicate at a distance of about several tens of meters to several hundreds of meters, such as specified low power radio, Bluetooth (registered trademark), and wireless local area network (wireless LAN). The network may be, for example, a wired communication network.

The image-capturing device 30 acquires time-series image data that is time-series data of an image including at least one construction machine 100 at the work site. That is, the image-capturing device 30 periodically captures the image at predetermined time intervals. The image captured by the image-capturing device 30 is sequentially input to the camera controller 40. The time interval of image capturing by each camera is set to, for example, 1/60 seconds, 1/30 seconds, 1/10 seconds, 1 second, or the like.

As illustrated in FIG. 1, in the present embodiment, the image-capturing device 30 includes a first camera 30A and a second camera 30B. In the work site, the first camera 30A is disposed at a position where time-series image data that is time-series data of an image including the first construction machine 100A can be acquired. In the work site, the second camera 30B is disposed at a position where time-series image data that is time-series data of an image including the second construction machine 100B can be acquired.

The camera controller 40 includes an image-capturing data storage unit 41, a time stamp processing unit 42, and a camera communication unit 43.

The image-capturing data storage unit 41 stores the time-series image data input from each of the first camera 30A and the second camera 30B.

The time stamp processing unit 42 gives time information to the time-series image data. A specific explanation is as follows. The time stamp processing unit 42 stores, in association with the image, time at which the image captured by each of the first camera 30A and the second camera 30B is input to the camera controller 40.

The camera communication unit 43 is configured to transmit and receive data to and from the main controller 60 (specifically, the communication unit 61 described later) via the network. The camera communication unit 43 transmits, in association with each other, the image and the time information given to the image. The image and the time information that have been transmitted are input to the main controller 60.

The main controller 60 includes the communication unit 61, a data storage unit 62, a posture estimation unit 63, a work content determination unit 64, a data synchronization unit 65, a data amount reduction unit 66, a search unit 67, and human machine interfaces (HMIs) 68 and 69.

The communication unit 61 is configured to transmit and receive data to and from each of the machine controller 50 and the camera controller 40 via the network. The communication unit 61 is configured to transmit and receive data to and from a cloud server 70 (specifically, a server communication unit 71 described later) via the network.

The data storage unit 62 stores the time-series operation data input from the machine controller 50 and stores the time-series image data input from the camera controller 40.

The posture estimation unit 63 estimates a posture of the construction machine 100 based on the image constituting the time-series image data, and generates posture estimation information regarding the posture having been estimated. In the present embodiment, the posture estimation information includes a posture of the boom 104, a posture of the arm 105, a posture of the bucket 106, a posture of the upper slewing body 102 with respect to the lower travelling body 101, and a posture of the lower travelling body 101 or the upper slewing body 102 with respect to a horizontal plane. More specifically, the posture estimation information includes the boom angle (boom estimation angle), the arm angle (arm estimation angle), the bucket angle (bucket estimation angle), the slewing angle (slewing estimation angle), and the vehicle body inclination angle (vehicle body inclination estimation angle).

Specifically, the posture estimation unit 63 estimates a posture of the first construction machine 100A based on an image of the first construction machine 100A acquired by the first camera 30A. Similarly, the posture estimation unit 63 estimates a posture of the second construction machine 100B based on an image of the second construction machine 100B acquired by the second camera 30B. The posture estimation information estimated by the posture estimation unit 63 is input to the work content determination unit 64.

Specifically, by inputting the image to a neural network (e.g., convolutional neural network) having a multilayer structure machine-learned by deep learning, for example, the posture estimation unit 63 extracts a plurality of feature points of the construction machine 100 included in the image. That is, the neural network is a posture estimation algorithm learned in advance using data regarding a feature point of the construction machine 100. The neural network referred to by the posture estimation unit 63 learns by, for example, learning processing based on training data indicating a correspondence relationship between an image of the construction machine 100 (hydraulic excavator) and coordinates of the feature point in the image.

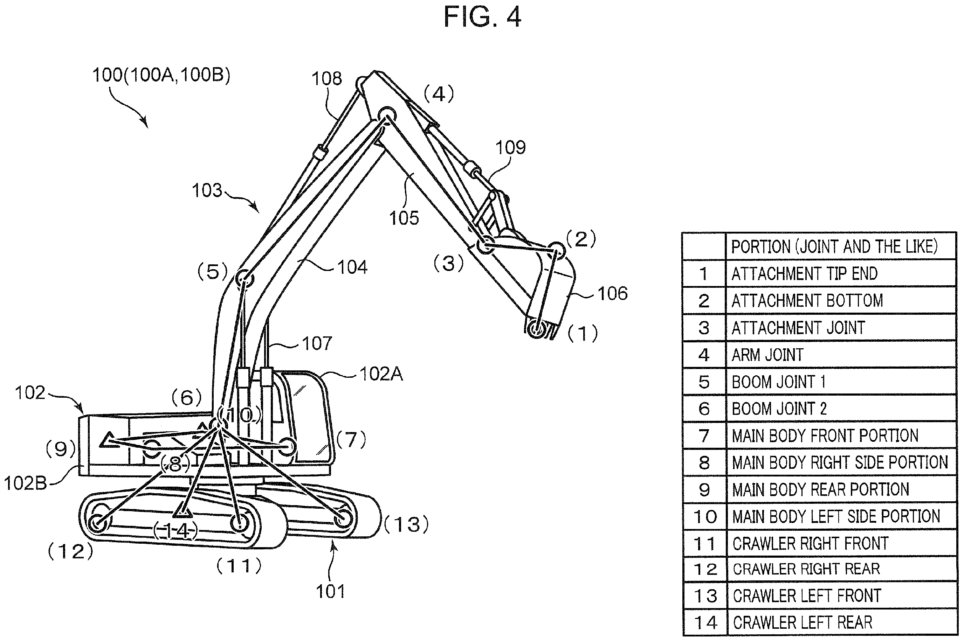

FIG. 4 illustrates an example of a plurality of feature points of the construction machine 100. In the neural network according to the present embodiment, a plurality of feature points of the construction machine 100 (hydraulic excavator) include an attachment tip end (1), an attachment bottom (2), an attachment joint (3), an arm joint (4), a boom joint 1 (5), a boom joint 2 (6), a main body front portion (7), a main body right side portion (8), a main body rear portion (9), a main body left side portion (10), a crawler right front (11), a crawler right rear (12), a crawler left front (13), and a crawler left rear (14). Note that the attachment tip end (1), the attachment bottom (2), and the attachment joint (3) indicate a tip end of the bucket 106, a bottom of the bucket 106, and a joint of the bucket 106, respectively. In FIG. 4, the main body left side portion (10) is not illustrated.

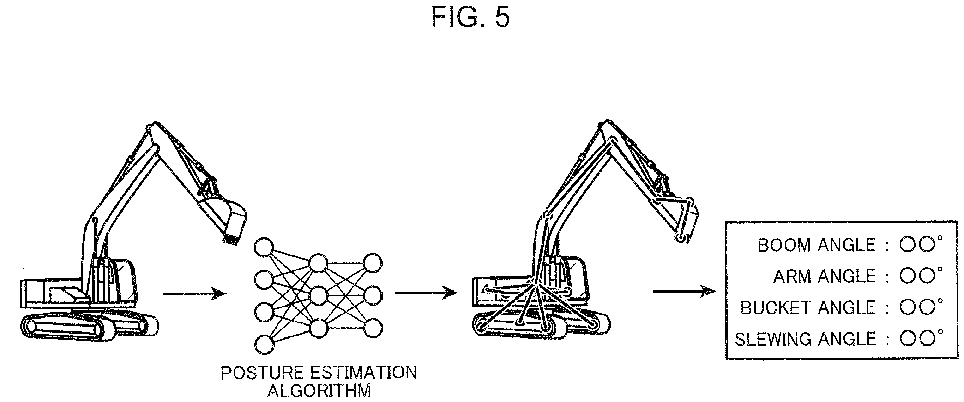

FIG. 5 is a view for explaining processing of estimating a posture of the construction machine 100 in the data processing system 10. As illustrated in FIG. 5, the neural network (posture estimation algorithm) extracts and outputs coordinates of each of the plurality of feature points based on an image of the construction machine 100 to be input. Then, based on coordinates of the plurality of feature points output from the neural network, the posture estimation unit 63 estimates the posture of the construction machine 100, specifically, the posture of the boom 104, the posture of the arm 105, the posture of the tip end attachment 106, the posture of the lower travelling body 101, and the posture of the upper slewing body 102.

The posture of the boom 104 is specified by an angle (boom angle) of the boom 104 with respect to the upper slewing body 102, for example. The posture of the arm 105 is specified by an angle (arm angle) of the arm 105 with respect to the boom 104, for example. The posture of the tip end attachment 106 is specified by an angle (bucket angle) of the bucket 106 with respect to the arm 105, for example. The posture of the lower travelling body 101 and the posture of the upper slewing body 102 are specified by an angle (slewing angle) of the upper slewing body 102 with respect to the lower travelling body 101, for example. Data (posture estimation information) regarding the posture estimated by the posture estimation unit 63 is input to the work content determination unit 64.

Note that the posture estimation unit 63 may estimate the posture of the construction machine based on the image acquired by the image-capturing device by using a technology such as Openpose (registered trademark), for example.

Based on time-series posture data that is time-series data of the posture of the first construction machine 100A estimated by the posture estimation unit 63, the work content determination unit 64 determines the work content performed by the first construction machine 100A. Based on time-series posture data that is time-series data of the posture of the second construction machine 100B estimated by the posture estimation unit 63, the work content determination unit 64 determines the work content performed by the second construction machine 100B.

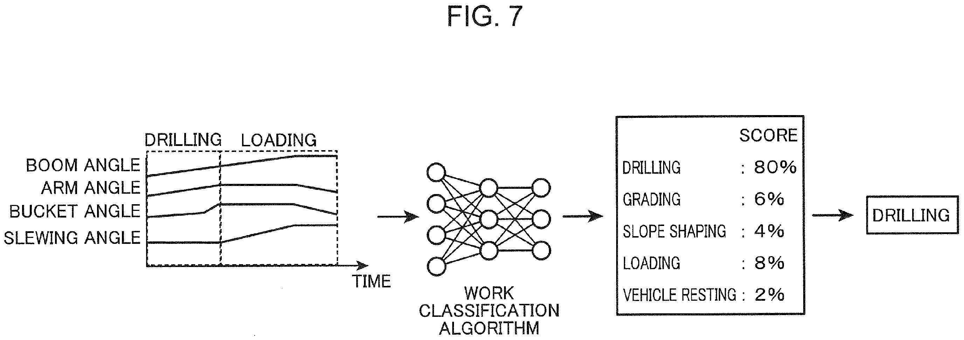

Specifically, by inputting time-series data of the posture to a neural network (e.g., recurrent neural network) having a multilayer structure machine-learned by deep learning, for example, the work content determination unit 64 extracts a feature included in time-series data of the posture. That is, the neural network is a work classification algorithm learned in advance using time-series data regarding movement of a feature point of the construction machine 100. The neural network referred to by the work content determination unit 64 learns by, for example, learning processing based on training data indicating a correspondence relationship between a plurality of work content candidates defined in advance and time-series data of the posture of the construction machine 100 having been tagged. The plurality of work content candidates defined in advance include, for example, drilling work, grading work, slope shaping work, loading work, vehicle resting, and traveling work (see FIG. 7).

The drilling work is work for drilling earth and sand on the ground by the bucket 106. The grading work is work for grading the ground by the bucket 106. The slope shaping work is work for shaping a slope surface that is an artificial slope formed by cutting earth or banking earth. The loading work is work for loading a holding target object such as earth and sand held by the bucket 106 to another place. The traveling work is a work for moving the construction machine 100 to a next work place at the work site. The vehicle resting means a state in which the construction machine 100 is stopped without performing actual work such as the loading work, the lifting work, the drilling work, the grading work, the slope shaping work, and the traveling work.

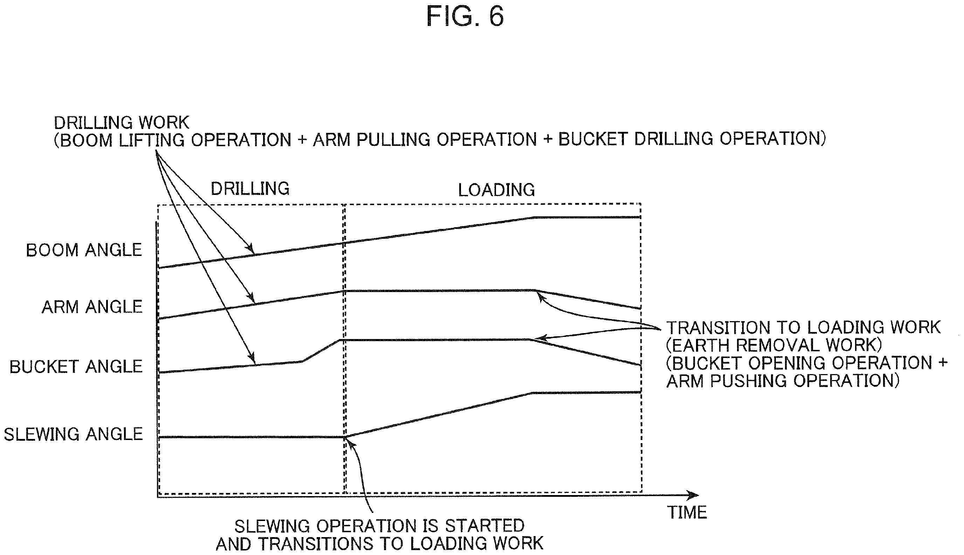

FIG. 6 is a view illustrating the time-series posture data of the construction machine 100 in the data processing system 10. The specific example illustrated in FIG. 6 illustrates time-series posture data regarding the boom angle, the arm angle, the bucket angle, and the slewing angle.

The specific example illustrated in FIG. 6 illustrates a time-series change in posture (time-series data of the posture) of the construction machine 100 when the drilling work is performed, and a time-series change in posture (time-series data of the posture) of the construction machine 100 when the loading work to be performed after this drilling work is performed. Each of these works is performed with a specific time-series change in terms of the posture of the construction machine 100. Therefore, a time-series change in the posture of the construction machine 100 is relevant to the work content of the construction machine 100, and serves as an index for determination of the work content. A specific explanation is as follows.

Since the drilling work does not involve a slewing operation, the slewing angle is constant in the drilling work as illustrated in FIG. 6. The boom angle and the arm angle gradually increase from the early stage to the final stage of the drilling work. The bucket angle gradually increases from the early stage to the middle stage of the drilling work, and greatly increases at the final stage.

Since the loading work involves a slewing operation, the slewing angle starts to increase when the drilling work is switched to the loading work. The slewing angle and the boom angle gradually increase from the early stage to the middle stage of the loading work, and the arm angle and the bucket angle are constant from the early stage to the middle stage of the loading work. On the other hand, the slewing angle and the boom angle are constant at the final stage of the loading work, and the arm angle and the bucket angle gradually decrease at the final stage of the loading work.

FIG. 7 is a view for explaining processing of determining the work content from the time-series posture data of the construction machine 100 in the data processing system 10. As illustrated in FIG. 7, an output layer of the neural network (work classification algorithm) executes calculation by a softmax function, for example, and outputs a score for each of the plurality of work content candidates. The work content determination unit 64 determines, as the work content, the work content candidate having the highest score based on the score of each of the plurality of work content candidates having been output from the output layer of the neural network. In the specific example of FIG. 7, the work content determination unit 64 determines "drilling work", having the highest score, among the plurality of work content candidates as the work content. The score illustrated in FIG. 7 indicates accuracy of determination by the work content determination unit 64.

Based on the time information given to each of the time-series image data and the time-series operation data, the data synchronization unit 65 associates the time-series image data and the time-series operation data with each other and stores a correspondence relationship between them. A specific explanation is as follows.

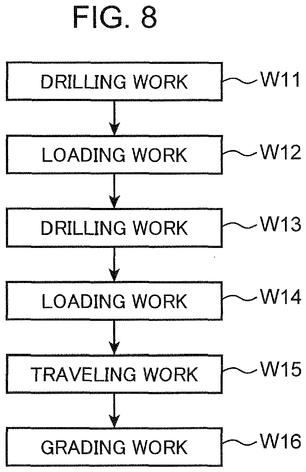

FIG. 8 is a view illustrating an example of a time-series change in a work content by the construction machine 100 determined by the work content determination unit 64. As illustrated in FIG. 8, a plurality of work contents by the construction machine 100 determined by the work content determination unit 64 include a drilling work W11, a loading work W12, a drilling work W13, a loading work W14, a traveling work W15, and a grading work W16, and FIG. 8 illustrates that these works have been performed in this order. The data storage unit 62 is configured to store, as a work history, the plurality of work contents determined by the work content determination unit 64.

The time-series image data of the first construction machine 100A captured by the first camera 30A of the image-capturing device 30 includes first image data corresponding to the drilling work W11, second image data corresponding to the loading work W12, third image data corresponding to the drilling work W13, fourth image data corresponding to the loading work W14, fifth image data corresponding to the traveling work W15, and sixth image data corresponding to the grading work W16.

The time information of the time-series image data given by the time stamp processing unit 42 includes first time information corresponding to the first image data, second time information corresponding to the second image data, third time information corresponding to the third image data, fourth time information corresponding to the fourth image data, fifth time information corresponding to the fifth image data, and sixth time information corresponding to the sixth image data.

The data synchronization unit 65 stores first operation data that is a portion having time information corresponding to the first time information, among the time-series operation data stored in the data storage unit 62, and the first image data in association with each other. The data synchronization unit 65 stores second operation data that is a portion having time information corresponding to the second time information, among the time-series operation data stored in the data storage unit 62, and the second image data in association with each other. The data synchronization unit 65 stores third operation data that is a portion having time information corresponding to the third time information, among the time-series operation data stored in the data storage unit 62, and the third image data in association with each other. Similarly, the data synchronization unit 65 stores fourth to sixth operation data that are portions having time information corresponding to the fourth to the sixth time information, respectively, among the time-series operation data stored in the data storage unit 62, and the fourth to the sixth image data, respectively, in association with each other.

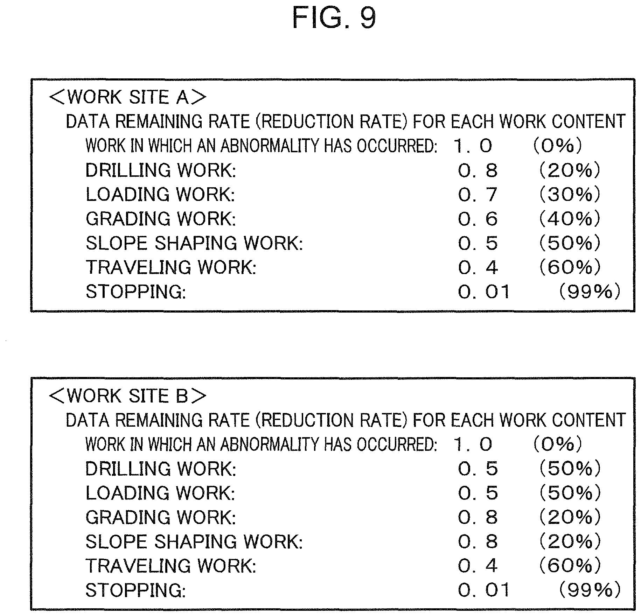

FIG. 9 is a view illustrating an example of a reduction rule set for each work site in the data processing system 10. As illustrated in FIG. 9, the reduction rule for a work site A includes, among the time-series image data stored in the data storage unit 62, a reduction rule of reducing the data amount of drilling image data, which is a portion corresponding to the drilling work, at a reduction rate (thinning rate) of 20%, a reduction rule of reducing the data amount of loading image data, which is a portion corresponding to the loading work, at a reduction rate of 30%, a reduction rule of reducing the data amount of grading image data, which is a portion corresponding to the grading work, at a reduction rate of 40%, a reduction rule of reducing the data amount of the slope shaping image data, which is a portion corresponding to the slope shaping work, at a reduction rate of 50%, and a reduction rule of reducing the data amount of travel image data, which is a portion corresponding to the traveling work, at a reduction rate of 60%, and a reduction rule of reducing the data amount of stop image data, which is a portion corresponding to a state in which the construction machine 100 is stopped (stopped work), at a reduction rate of 99%.

As illustrated in FIG. 9, the reduction rule for the work site A further includes, among the time-series image data stored in the data storage unit 62, a reduction rule of reducing the data amount of abnormality image data, which is a portion corresponding to work in which an abnormality has occurred, at a reduction rate of 0%. That is, "reducing the data amount at a reduction rate of 0%" means to allow all of the abnormality image data to remain. Works in which the abnormality has occurred include, for example, work in which a failure of the construction machine 100 has occurred and work in which a preset prohibited operation has been performed. As the prohibited operation, for example, an operation of simultaneously performing the drilling work and the traveling work is set. In a case of corresponding to a work in which the abnormality has occurred and also corresponding to another work described above, priority is given to the reduction rule regarding a work in which the abnormality has occurred.

As illustrated in FIG. 9, the reduction rule for the work site B includes contents different from those of the reduction rule for the work site A.

Since work in which the abnormality has occurred is of high importance in any site of the work site A and the work site B, the reduction rule is set such that the reduction rate of work data regarding the work becomes small (such that a data remaining rate becomes large). At the work site A, since the drilling work is of high importance, the reduction rule is set such that the reduction rate of work data regarding the drilling work becomes small. On the other hand, at the work site B, since the grading work and the slope shaping work are of high importance, the reduction rule is set so that the reduction rate of work data regarding these works becomes small.

For example, regarding the work site A, the data amount reduction unit 66 reduces, at a reduction rate of 20% based on the reduction rule illustrated in FIG. 9, the data amount of drilling image data, which is a portion corresponding to the drilling work W11 illustrated in FIG. 8, among the time-series image data stored in the data storage unit 62. Similarly, the data amount reduction unit 66 reduces, at a reduction rate of 30% based on the reduction rule illustrated in FIG. 9, the data amount of loading image data, which is a portion corresponding to the loading work W12 illustrated in FIG. 8, among the time-series image data stored in the data storage unit 62. For the other works illustrated in FIG. 8, the data amount is reduced similarly.

A reduction method of data amount of the image data is not particularly limited. For example, the data amount of reduction target image data may be reduced by reducing the frame rate based on a reduction rate set by the reduction rule. In this case, the data amount of drilling image data, which is a portion corresponding to the drilling work W11 illustrated in FIG. 8, for example, is reduced such that the frame rate after the reduction becomes a value obtained by multiplying the frame rate before the reduction by 0.8.

In the present embodiment, the data amount reduction unit 66 reduces the data amount of drilling operation data, which is a portion having time information corresponding to time information of the drilling work W11 illustrated in FIG. 8, among the time-series operation data stored in the data storage unit 62. Similarly, the data amount reduction unit 66 reduces the data amount of loading operation data, which is a portion having time information corresponding to time information of the loading work W12 illustrated in FIG. 8, among the time-series operation data stored in the data storage unit 62. For the other works illustrated in FIG. 8, the data amount of operation data is reduced similarly.

The reduction rule of the data amount of the operation data may be the same as the reduction rule of the data amount of the image data illustrated in FIG. 9, for example. In this case, for example, the data amount of drilling operation data, which is a portion having time information corresponding to time information of the drilling work W11 illustrated in FIG. 8, is reduced at a reduction rate of 20%. The reduction rule of the data amount of the operation data may be different from the reduction rule of the data amount of the image data illustrated in FIG. 9, for example. Specifically, all operation data corresponding to image data to be reduced may be erased, for example.

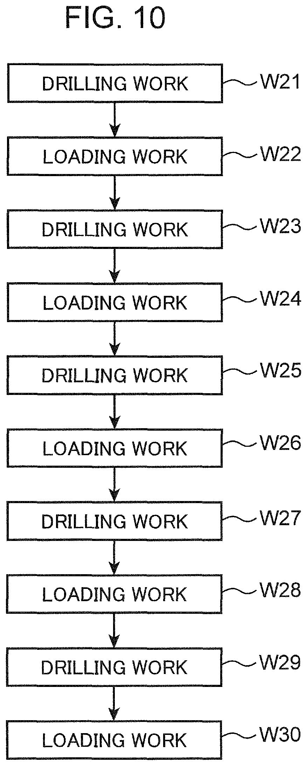

FIG. 10 is a view illustrating another example of a time-series change in a work content by a construction machine determined by the work content determination unit. As illustrated in FIG. 10, a plurality of work contents by the construction machine 100 determined by the work content determination unit 64 include a repetitive work including a plurality of drilling works and a plurality of loading works. In the specific example illustrated in FIG. 10, combination of the drilling work and the loading work is continuously performed a plurality of times (five times in FIG. 10). The data storage unit 62 is configured to store, as a work history, the plurality of work contents determined by the work content determination unit 64.

When determining the work content of each of a plurality of works W21 to W30 illustrated in FIG. 10, the work content determination unit 64 outputs a score as illustrated in FIG. 7 described above.

Based on the score, the data amount reduction unit 66 reduces the data amount of at least one of a plurality of drilling image data and a plurality of loading image data, which are portions corresponding to the plurality of drilling works and the plurality of loading works, respectively, among the time-series image data stored in the data storage unit 62.

Specifically, the data amount reduction unit 66 may reduce the image data corresponding to the drilling work having the lowest score among the plurality of drilling works W21, W23, W25, W27, and W29, for example. In this case, the data amount reduction unit 66 may also reduce the image data corresponding to the loading work combined with the drilling work having the lowest score.

The data amount reduction unit 66 may reduce the image data corresponding to the drilling work having the lowest score and the image data corresponding to the drilling work having the highest score among the plurality of drilling works W21, W23, W25, W27, and W29, for example. In this case, the data amount reduction unit 66 may also reduce the image data corresponding to the loading work combined with the drilling work having the lowest score and the image data corresponding to the loading work combined with the drilling work having the highest score.

When a search condition is input, the search unit 67 searches the work history stored in the data storage unit 62 for information corresponding to the search condition, and outputs the information having been searched. As described above, the data storage unit 62 is configured to store, as a work history, the plurality of work contents determined by the work content determination unit 64. The data storage unit 62 may further store the time-series operation data acquired by the plurality of sensors.

As illustrated in FIGS. 1 and 2, the HMIs 68 and 69 include an input unit 68 such as a keyboard with which an operator can input the search condition, and a display unit 69 such as a display device to which the information searched by the search unit 67 is output.

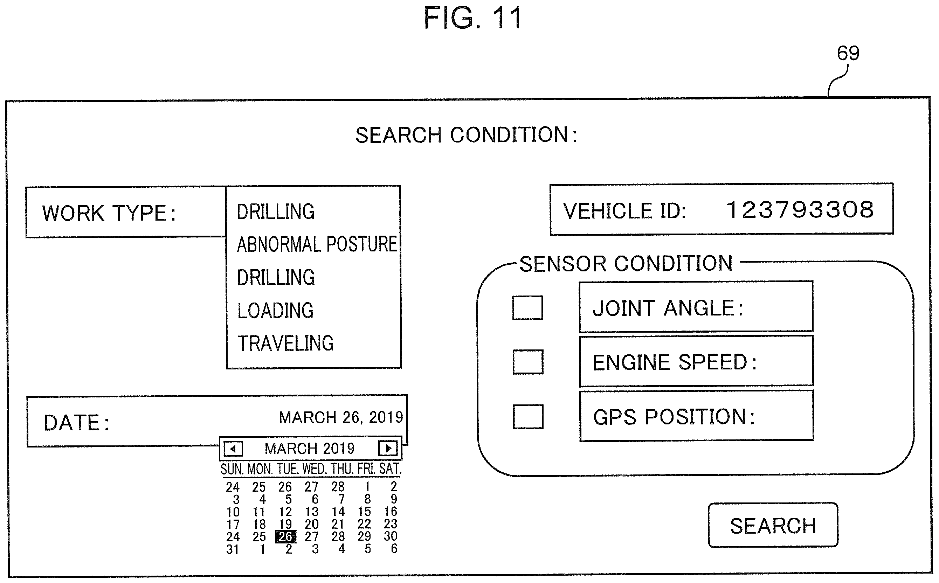

FIG. 11 is a view illustrating an example of a screen of the display unit 69 when the operator inputs the search condition. The operator can input, on the screen, for example, a work type (work content), a date, a vehicle ID, a sensor condition, and the like.

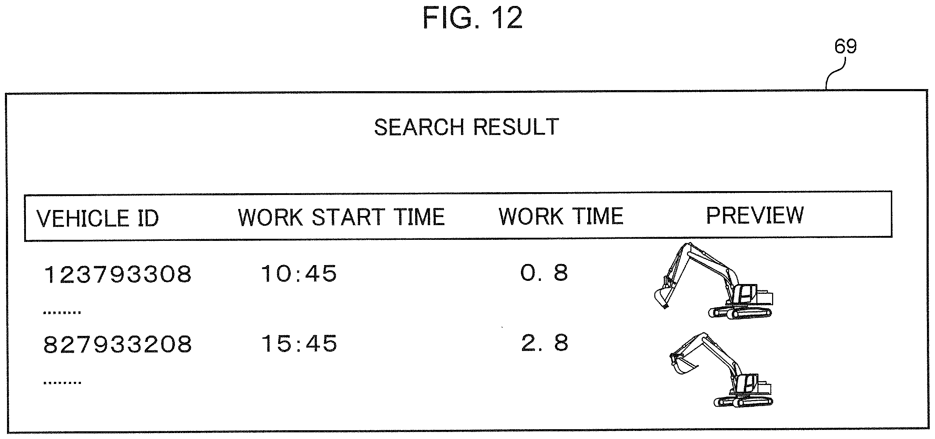

FIG. 12 is a view illustrating an example of a screen of the display unit 69 to which the information searched by the search unit 67 is output. In the specific example illustrated in FIG. 12, a vehicle ID, a work start time, a work time, and an image of the construction machine 100 are displayed on the display unit 69 as search results.

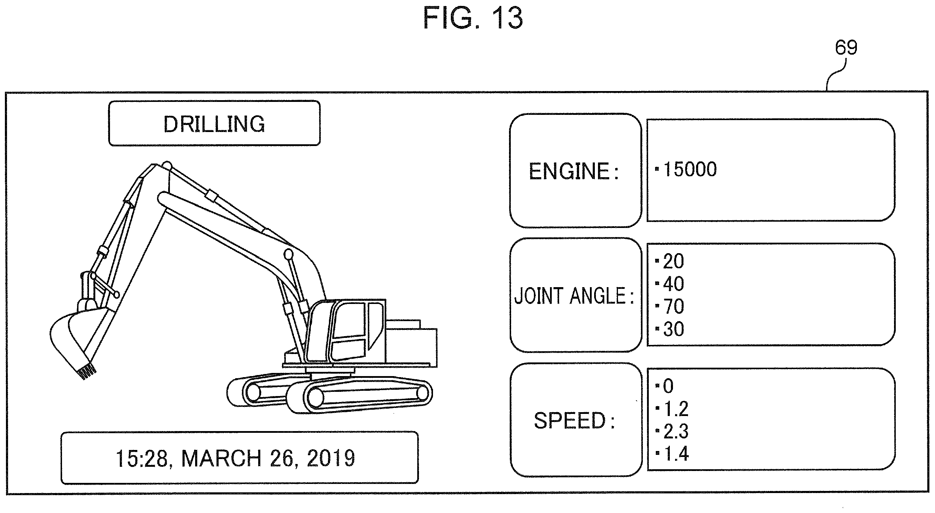

FIG. 13 is a view illustrating another example of a screen of the display unit 69 to which the information searched by the search unit 67 is output. In the specific example illustrated in FIG. 13, a date, an image of the construction machine 100, a work content, and an operation parameter detected by a sensor are displayed on the display unit 69 as search results.

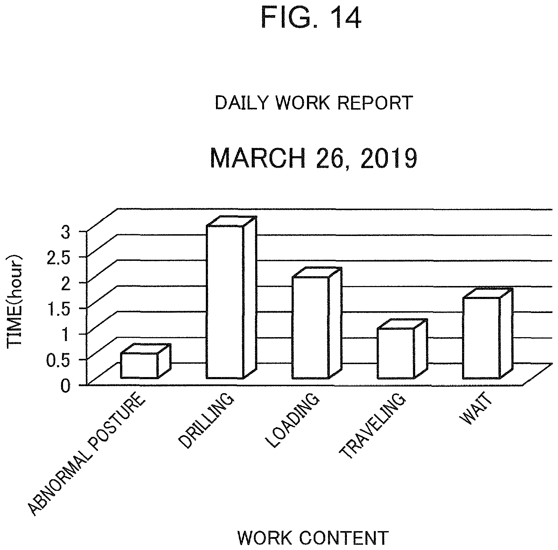

FIG. 14 is a view illustrating an example of a daily work report generated based on information acquired in the data processing system 10.

As illustrated in FIG. 2, the cloud server 70 includes a server communication unit 71, a data storage unit 72, and a search unit 73.

The server communication unit 71 is configured to transmit and receive data to and from the communication unit 61 of the main controller 60 via the network.

The data storage unit 72 receives data stored in the data storage unit 62 of the main controller 60 via the communication unit 61 and the server communication unit 71, and stores the data. The data storage unit 72 stores the time-series image data reduced by the data amount reduction unit 66. The data storage unit 72 may store, as a work history, the plurality of work contents determined by the work content determination unit 64. The data storage unit 72 may further store the time-series operation data acquired by the plurality of sensors.

When a search condition is input, the search unit 73 searches the work history stored in the data storage unit 72 for information corresponding to the search condition, and outputs the information having been searched. The cloud server 70 may be configured to transmit and receive data to and from a terminal 80, for example, via the network. The terminal 80 includes a computer such as a mobile terminal used by work-related persons such as a manager who manages work at a work site and an operator who performs work at the work site. A work-related person inputs the search condition to an input unit of the terminal 80.

When a search condition is input, the search unit 73 searches the work history stored in the data storage unit 72 for information corresponding to the search condition, and outputs the information having been searched. The information having been output is input to the terminal 80. This allows the work-related person to confirm the information displayed on a display unit of the terminal 80.

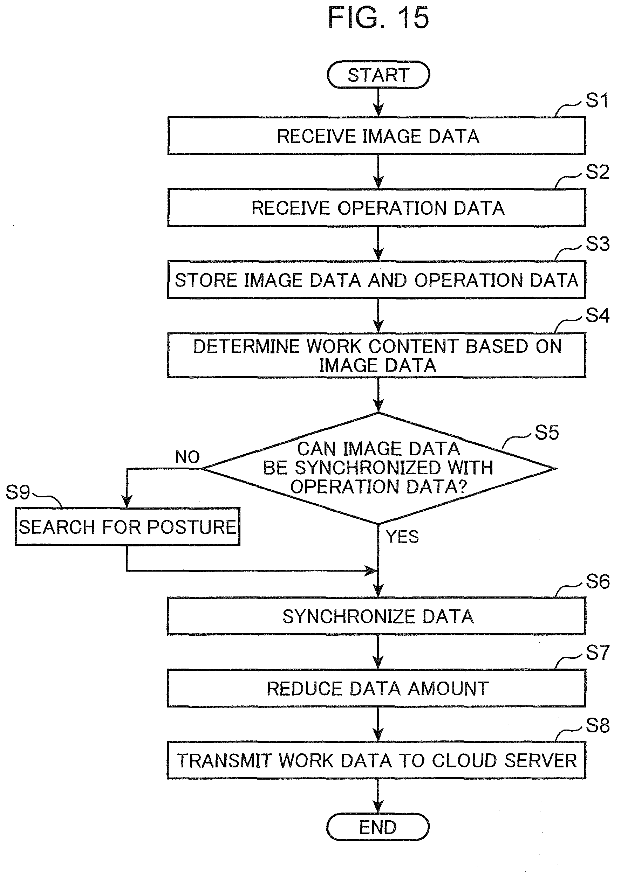

FIG. 15 is a flowchart presenting calculation processing of the data processing system 10. As illustrated in FIG. 15, the communication unit 61 of the main controller 60 receives the time-series image data of the image acquired by the image-capturing device 30 (step S1). The communication unit 61 receives time-series operation data of the operation parameter acquired by the plurality of sensors (step S2). The communication unit 61 may receive the time-series image data in a plurality of batches, or may receive the time-series image data all at once. Similarly, the communication unit 61 may receive the time-series operation data in a plurality of batches, or may receive the time-series operation data all at once.

Next, the data storage unit 62 stores the time-series image data and the time-series operation data (step S3).

Next, the posture estimation unit 63 and the work content determination unit 64 determine a plurality of work contents based on the time-series image data (step S4).

Next, the data synchronization unit 65 determines whether or not to be able to synchronize the time-series image data with the time-series operation data (step S5).

In a case where the time information is given to the time-series image data and the time information is given to the time-series operation data (YES in step S5), the data synchronization unit 65 synchronizes these data by associating the time-series image data with the time-series operation data based on these pieces of time information (step S6).

Next, in a case where the plurality of work contents determined by the work content determination unit 64 include a preset first specification work, the data amount reduction unit 66 reduces, based on a preset first reduction rule, the data amount of first image data that is a portion corresponding to the first specification work among the time-series image data stored in the data storage unit 62. In a case where the plurality of work contents determined by the work content determination unit 64 include a second specification work, which is a preset specification work and different from the first specification work, the data amount reduction unit 66 reduces, based on a second reduction rule, which is a preset reduction rule and different from the first reduction rule, the data amount of second image data that is a portion corresponding to the second specification work among the time-series image data stored in the data storage unit 62 (step S7).

Next, the communication unit 61 transmits some or all of the data stored in the data storage unit 62 to the cloud server 70 (step S8).

In a case where the time-series image data and the time-series operation data cannot be synchronized with each other in step S5 (NO in step S5) such as a case where time information is not appropriately given to the time-series operation data, the main controller 60 compares the posture information generated by the posture information generation unit 52 with the posture estimation information estimated by the posture estimation unit 63, and searches for the time-series operation data corresponding to the time-series image data (step S9). The data synchronization unit 65 synchronizes the time-series operation data having been searched with the time-series image data (step S6).

As described above, the data processing system 10 can reduce, according to the work content of the construction machine 100, the data amount of work data including the time-series data of an image of the construction machine 100 at the work site. This can cause the data storage unit 62 to store the time-series image data in which the data amount has been reduced. It is also possible to reduce the communication amount in transmission and reception of data via the communication unit.

### [Modifications]

The present invention is not limited to the embodiment described above. The present invention can include the following aspects, for example.

### (A) Regarding data amount reduction unit

In the embodiment, the data amount reduction unit 66 is configured to reduce both the data amount of the time-series image data and the data amount of the time-series operation data, but the data processing system is not limited to this aspect. The data processing system is only required to be configured such that the data amount reduction unit reduces the data amount of at least the time-series image data. In this case, some or all of the plurality of sensors 21 to 27 can be omitted, and the data synchronization unit 65 can be omitted.

### (B) Regarding image-capturing device

The image-capturing device 30 may include a stereo camera, for example.

### (C) Regarding cloud server

In the embodiment, the data processing system 10 includes the cloud server 70, but the cloud server 70 can be omitted.

### (D) Regarding time stamp processing unit

In the above embodiment, each of the camera controller 40 and the machine controller 50 includes a time stamp processing unit, but the data processing system is not limited to this aspect. In the data processing system, for example, the main controller 60 may include a time stamp processing unit, and this time stamp processing unit may give time information to each of the time-series image data and the time-series operation data. In this case, the time stamp processing unit of each of the camera controller 40 and the machine controller 50 can be omitted.

### (E) Regarding construction machine

The tip end attachment is not limited to the bucket, and may be another tip end attachment such as a grapple, a crusher, a breaker, and a fork. The construction machine is not limited to the hydraulic excavator, and may be another construction machine. In the above embodiment, the construction machine includes the lower travelling body 101 that can travel, but the present invention is not limited thereto. In the present invention, the construction machine may have a structure in which the upper slewing body 102 is supported by a base installed at a specific place.

### (F) Regarding estimation of posture of construction machine based on image

In the embodiment, estimation of the posture of the construction machine 100 based on the image by the posture estimation unit 63 is performed using a neural network (posture estimation algorithm) machine-learned in advance, but the data processing system is not limited to this aspect. In the data processing system, estimation of the posture of the construction machine may be performed by another method other than the method using the neural network. Examples of the other method include a method using machine learning other than the method using the neural network, and time series algorithm.

### (G) Others

A data processing system 20 according to the embodiment includes the search units 67 and 73, but one or both of them can be omitted. The machine controller 50 of the data processing system 20 according to the embodiment includes the posture information generation unit 52, but the posture information generation unit 52 can be omitted.

Features of the above-described embodiment are summarized as follows.

A data processing system for a construction machine according to one aspect of the present invention is a data processing system for a construction machine for reducing a data amount of work data regarding work of a construction machine, the data processing system including: an image-capturing device that acquires time-series image data that is time-series data of an image including the construction machine at a work site; a data storage unit that stores the time-series image data; a work content determination unit that determines at least one work content of the construction machine based on the time-series image data; and a data amount reduction unit, in which the data amount reduction unit is configured to, when the at least one work content determined by the work content determination unit includes a preset first specification work, reduce, based on a preset first reduction rule, a data amount of first image data that is a portion corresponding to the first specification work among the time-series image data stored in the data storage unit, and, when the at least one work content determined by the work content determination unit includes a second specification work, which is a preset specification work and different from the first specification work, reduce, based on a second reduction rule, which is a preset reduction rule and different from the first reduction rule, a data amount of second image data that is a portion corresponding to the second specification work among the time-series image data stored in the data storage unit.

In this aspect, the first reduction rule for reducing the data amount of the first image data corresponding to the first specification work and the second reduction rule for reducing the data amount of the second image data corresponding to the second specification work are set in advance by the work-related person, and among the time-series image data, the data amount of the first image data is reduced based on the first reduction rule and the data amount of the second image data is reduced based on the second reduction rule. That is, by setting the first reduction rule and the second reduction rule that are different from each other, the work-related person can give superiority or inferiority to the first specification work and the second specification work from the viewpoint of reduction in the data amount. This makes it possible to reduce, while preferentially leaving image data of a work content to be stored, relatively large data amount of image data having a lower priority (importance) than that of the image data. Thus, it is possible to appropriately reduce a data amount of work data including time-series data of an image of the construction machine at a work site according to a work content of the construction machine.

In the above aspect, the first reduction rule may be set to reduce the data amount of the first image data at a preset first reduction rate, and the second reduction rule may be set to reduce the data amount of the second image data at a second reduction rate, which is a preset reduction rate and different from the first reduction rate.

In this aspect, of the first specification work and the second specification work, a reduction rate of one work having a high importance is set to be smaller than a reduction rate of the other work. This can reduce the data amount of the work data according to an importance of a work content.

In the above aspect, the data processing system further includes: at least one sensor that acquires time-series operation data, which is time-series data of an operation parameter that changes corresponding to an operation of the construction machine; and a time stamp processing unit that gives time information to each of the time-series image data and the time-series operation data, in which the data storage unit is configured to further store the time-series operation data, the time information of the time-series image data includes first time information corresponding to the first image data and second time information corresponding to the second image data, and the data amount reduction unit is preferably configured to, when the at least one work content determined by the work content determination unit includes the first specification work, reduce a data amount of first operation data that is a portion having time information corresponding to the first time information among the time-series operation data stored in the data storage unit, and, when the at least one work content determined by the work content determination unit includes the second specification work, reduce a data amount of second operation data that is a portion having time information corresponding to the second time information among the time-series operation data stored in the data storage unit.

In this aspect, the time-series operation data acquired by the at least one sensor is associated with the time-series image data by the time information given to each of the time-series image data and the time-series operation data by the time stamp processing unit. Then, when the at least one work content includes the first specification work, the data amount reduction unit not only reduces the data amount of the first image data but also reduces the data amount of the first operation data associated with the first image data, and when the at least one work content includes the second specification work, the data amount reduction unit not only reduces the data amount of the second image data but also reduces the data amount of the second operation data associated with the second image data. This can reduce, according to a work content of the construction machine, the data amount of the time-series image data acquired by the image-capturing device and the data amount of the time-series operation data acquired by the sensor.

In the above aspect, the work content determination unit may be configured to output a score indicating accuracy of determination of each of a plurality of third specification works when the at least one work content includes repetitive work including the plurality of third specification works set in advance, and the data amount reduction unit may be configured to reduce, based on the score, a data amount of at least one of a plurality of third image data that is a portion corresponding to the plurality of third specification works among the time-series image data stored in the data storage unit.

In this aspect, the data amount of at least one third image data of the plurality of third image data is reduced based on the score. A specific example of this aspect is as follows. In this aspect, the data amount reduction unit may be configured such that the data amount of the third image data corresponding to the third specification work having a high score among the plurality of third specification works is not reduced, while the data amount of the third image data corresponding to the third specification work having a low score among the plurality of third specification works is reduced, for example. The data amount reduction unit may be configured such that among the plurality of third specification works, the data amount of the third image data corresponding to the third specification work having a low score is reduced more than the data amount of the third image data corresponding to the third specification work having a high score. Note that the third specification work may be same work as the first specification work or the second specification work, or may be work different from the first specification work and the second specification work.

In the above aspect, the data storage unit may be configured to store, as a work history, the at least one work content determined by the work content determination unit, the data processing system may further include a search unit that receives input of a search condition, and the search unit may be configured to, when the search condition is input, search from the work history stored in the data storage unit for information corresponding to the search condition, and output the information having been searched.

In this aspect, by inputting the search condition, the work-related person can obtain work data regarding a desired work content from the work history stored in the data storage unit.

In the above aspect, the data processing system may further include a posture estimation unit that estimates a posture of the construction machine based on the image constituting the time-series image data, in which the work content determination unit may be configured to determine the work content based on time-series posture data, which is time-series data of the posture estimated by the posture estimation unit.

In this aspect, the work content of the construction machine can be determined based on a dynamic change in posture of the construction machine. Specifically, the work of the construction machine includes, for example, drilling work, grading work, slope shaping work, and loading work, and each of these works is performed with a specific time-series change in terms of the posture of the construction machine. Therefore, a time-series change in the posture of the construction machine is relevant to the work content of the construction machine, and serves as an index for determination of the work content.

## Claims

1. A data processing system for reducing a data amount of work data regarding work of a construction machine, the data processing system comprising:
an image-capturing device that acquires time-series image data that is time-series data of an image including the construction machine at a work site;
a data storage unit that stores the time-series image data;
a work content determination unit that determines at least one work content of the construction machine based on the time-series image data; and
a data amount reduction unit,
wherein the data amount reduction unit is configured to,
when the at least one work content determined by the work content determination unit includes a preset first specification work, reduce, based on a preset first reduction rule, a data amount of first image data that is a portion corresponding to the first specification work among the time-series image data stored in the data storage unit, and,
when the at least one work content determined by the work content determination unit includes a second specification work, which is a preset specification work and different from the first specification work, reduce, based on a second reduction rule, which is a preset reduction rule and different from the first reduction rule, a data amount of second image data that is a portion corresponding to the second specification work among the time-series image data stored in the data storage unit.

2. The data processing system for a construction machine according to claim 1, wherein
the first reduction rule is set to reduce the data amount of the first image data at a preset first reduction rate, and
the second reduction rule is set to reduce the data amount of the second image data at a second reduction rate, which is a preset reduction rate and different from the first reduction rate.

3. The data processing system for a construction machine according to claim 1 or 2, the data processing system further comprising:
at least one sensor that acquires time-series operation data, which is time-series data of an operation parameter that changes corresponding to an operation of the construction machine; and
a time stamp processing unit that gives time information to each of the time-series image data and the time-series operation data,
wherein the data storage unit is configured to further store the time-series operation data,
the time information of the time-series image data includes first time information corresponding to the first image data and second time information corresponding to the second image data, and
the data amount reduction unit is preferably configured to,
when the at least one work content determined by the work content determination unit includes the first specification work, reduce a data amount of first operation data that is a portion having time information corresponding to the first time information among the time-series operation data stored in the data storage unit, and,
when the at least one work content determined by the work content determination unit includes the second specification work, reduce a data amount of second operation data that is a portion having time information corresponding to the second time information among the time-series operation data stored in the data storage unit.

4. The data processing system for a construction machine according to any one of claims 1 to 3, wherein
the work content determination unit is configured to output a score indicating accuracy of determination of each of a plurality of third specification works when the at least one work content includes repetitive work including the plurality of third specification works set in advance, and
the data amount reduction unit is configured to reduce, based on the score, a data amount of at least one of a plurality of third image data that is a portion corresponding to the plurality of third specification works among the time-series image data stored in the data storage unit.

5. The data processing system for a construction machine according to any one of claims 1 to 4, wherein
the data storage unit is configured to store, as a work history, the at least one work content determined by the work content determination unit,
the data processing system further includes a search unit that receives input of a search condition, and
the search unit is configured to, when the search condition is input, search from the work history stored in the data storage unit for information corresponding to the search condition, and output the information having been searched.

6. The data processing system for a construction machine according to any one of claims 1 to 5, further comprising:
a posture estimation unit that estimates a posture of the construction machine based on the image constituting the time-series image data,
wherein the work content determination unit determines the work content based on time-series posture data, which is time-series data of the posture estimated by the posture estimation unit.
